# EUROPÄISCHE PATENTSCHRIFT

(11) **EP 0 561 345 B1**
(45) Veröffentlichungstag und Bekanntmachung des Hinweises auf die Patenterteilung: **12.06.1996**
(21) Anmeldenummer: 93104267.5
(22) Anmeldetag: 16.03.1993
(51) Int. Cl.: F16B 7/00, E06B 3/96

(54) **Verfahren und Vorrichtung zum Verbinden von ineinander schiebbaren Profilteilen**
Method and device for fastening two profiled parts sliding into each other
Procédé et dispositif pour fixer deux pièces profilées coulissantes l'une dans l'autre

(30) Priorität: 16.03.1992 DE 4208411; 03.06.1992 DE 4218304
(43) Veröffentlichungstag der Anmeldung: 22.09.1993
(73) Patentinhaber: Euromotive Gesellschaft m.b.H., 5282 Ranshofen (AT)
(72) Erfinder: Garnweidner, Peter, 5112 Lamprechtshausen (AT)
(74) Vertreter: WILHELMS, KILIAN & PARTNER Patentanwälte

(56) Entgegenhaltungen:
- EP-A- 0 246 833
- EP-A- 0 323 543
- CH-A- 337 478
- DE-A- 3 131 155
- DE-C- 927 601
- DE-C- 939 848
- DE-C- 3 612 717
- US-A- 4 721 407

## Beschreibung

Die Erfindung betrifft Verbindung von axial ineinander geschobenen Profilteilen nach dem Oberbegriff des Patentanspruchs 1

Bei einer Verbindung von axial ineinander geschobenen Profilteilen, die aus der US PS 4 900 049 bekannt ist, werden zylindrische Profilteile mit verschiedenen Durchmessern dadurch verbunden, daß das innere Profilteil mit einem Bereich mit einem ersten Außendurchmesser und einem Bereich mit einem zweiten Außendurchmesser versehen wird, wobei der erste Außendurchmesser größer als der zweite Außendurchmesser ist und an einem Teil des Bereiches mit dem zweiten Außendurchmesser vorstehende Stege vorgesehen sind, deren Höhe dem ersten Durchmesser entspricht. Die beiden Profilteile werden ineinander geschoben und in dem Bereich, in dem sie ineinander geschoben sind, miteinander verklebt.

Aus der gattungsbildenden EP 0 447 951 A1 ist es weiterhin bekannt, zwei ineinander geschobene Profilteile mit polygonalem Querschnitt dadurch zu verbinden, daß durch eine entsprechende Ausbildung der Profilteile in dem Bereich, in dem sie ineinander geschoben werden, ein umlaufender mit Kleber gefüllter Spalt gebildet wird, der beidseits von Zonen mit Preßsitz begrenzt ist.

Bei einer derartigen Verbindung von Profilteilen wird ein flüssiger Kleber auf den zu verklebenden Teil des inneren Profilteils aufgestrichen, was zur Folge hat, daß in der folgenden Zeit bis zum Ineinanderschieben der beiden Profilteile der Kleber fließen und sich somit ungleichmäßig verteilen kann. Das ist insbesondere dann der Fall, wenn die beiden Profilteile horizontal ineinander geschoben werden.

Weiterhin ist die aus der EP 0 447 951 A1 bekannte Verbindung insofern nachteilig, als beim Ineinanderschieben der beiden Profilteile der Kleber an manchen Stellen durch die Stirnfläche des auf das innere Profilteil aufgeschobenen äußeren Profilteils über den Bereich des dazwischen gebildeten Klebespaltes hinausgeschoben werden kann.

Das hat zur Folge, daß bei der Herstellung der Verbindung kaum sicherzustellen ist, daß eine Klebeverbindung am gesamten Klebespalt in axialer Richtung sowie in Umfangsrichtung erzielt wird. Dieses Verfahren hat daher nur eine geringe Prozeßsicherheit. Darüberhinaus wird bei einer Biegebelastung der Verbindung die verfestigte Klebermasse durch ungünstige Krafteinleitung stark beispielsweise auf Zug, Scherung und Druck beansprucht.

Bei der Verbindung gemäß, der US PS 4 900 049 sind die Stege nur über einen Teil des Bereiches des inneren Profilteils mit kleinerem, d.h. zweitem Außendurchmesser ausgebildet, so daß im Bereich der Stege die oben angegebenen Nachteile teilweise beseitigt werden können, in dem Bereich, in dem keine Stege vorgesehen sind, treten jedoch die gleichen oben genannten Nachteile auf.

Die Verbindung nach der US PS 4 900 049 hat darüberhinaus den Nachteil, daß die Ausbildung der Stege am inneren Profilteil, das in Form eines Gußteils ausgebildet wird, einen erheblichen zusätzlichen Aufwand erfordert.

Die der Erfindung zugrundeliegende Aufgabe besteht darin, die Verbindung so auszubilden, daß nach dem Zusammenfügen der Profilteile Torsionsmomente und Querkräfte hauptsächlich über die Stege und nicht über die Klebeflächen übertragen werden.

Diese Aufgabe wird gemäß der Erfindung durch die Ausbildung gelöst, die im kennzeichnenden Teil des Patent-ansprüchs 1 angegeben ist.

Bevorzugte Weiterbildungen der erfindungsgemäßen Verbindung sind Gegenstand der Patentansprüche 2 und 3.

Im folgenden wird anhand der zugehörigen Zeichnung ein besonders bevorzugte Ausführungsbeispiel der Erfindung näher beschrieben. Es zeigen
Fig. 1 eine Axialschnittansicht einer Verbindung von zwei ineinander schiebbaren Profilteilen,
Fig. 2 eine Axialschnittansicht eines zweiten Ausführungsbeispiels einer derartigen Verbindung,
Fig. 3 eine Axialschnittansicht eines dritten Ausführungsbeispiels einer derartigen Verbindung,
Fig. 4 eine Axialschnittansicht des Ausführungsbeispiels der Erfindung,
Fig. 5 eine Schnittansicht längs der Linie B-B in Fig.
4 und Fig. 6 das Detail X in Fig. 5 im einzelnen.

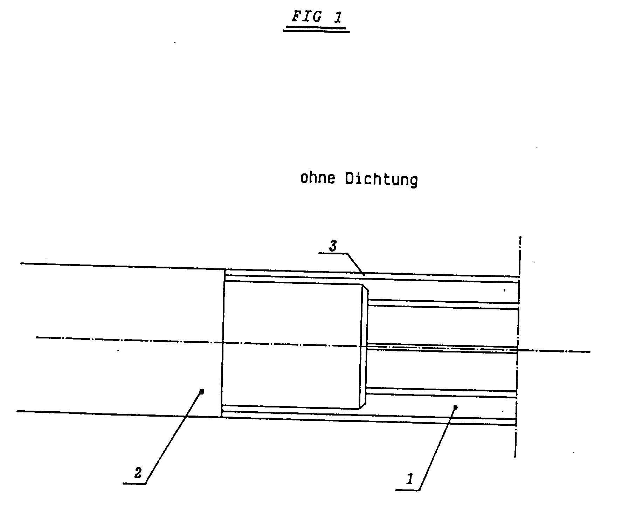

Bei dem in Fig. 1 dargestellten Beispiel sind zwei Profilteile 1 und 2 dadurch miteinander verbunden, daß sie axial über einem gewissen Bereich ineinander geschoben sind. Das äußere Profilteil 1 ist an seiner Innenfläche, d.h. an seiner Verbindungsfläche zum inneren Profilteil 2 mit axial verlaufenden durchgehenden Stegen 3 versehen, die den Klebespalt zwischen dem inneren und dem äußeren Profilteil in Umfangsrichtung unterteilen. An dem Bereich, an dem die beiden Profilteile 1,2 ineinander geschoben sind, d.h. im Bereich des Klebespaltes, werden die beiden Profilteile 1 und 2 über einen flüssigen Kleber miteinander verklebt, der vor dem Ineinanderschieben wenigstens auf das innere Profilteil 2 aufgestrichen worden ist.

Wie es in Fig. 1 dargestellt ist, ist die Ausbildung vorzugsweise derart, daß im zusammengeschobenen Zustand die Außenflächen der beiden Profilteile 1 und 2 miteinander fluchten. Dazu ist der Bereich des inneren Profilteils 2, der in das äußere Profilteil 1 geschoben wird, mit verringerten Abmessungen ausgebildet.

Der Querschnitt der Stege 3 kann dreieckig ausgebildet sein. Es sind jedoch auch andere Querschnittsformen möglich. Insbesondere bei Biegebeanspruchungen sind rechteckige, trapezförmige oder abgerundete Querschnittsformen der Stege 3 vorteilhaft.

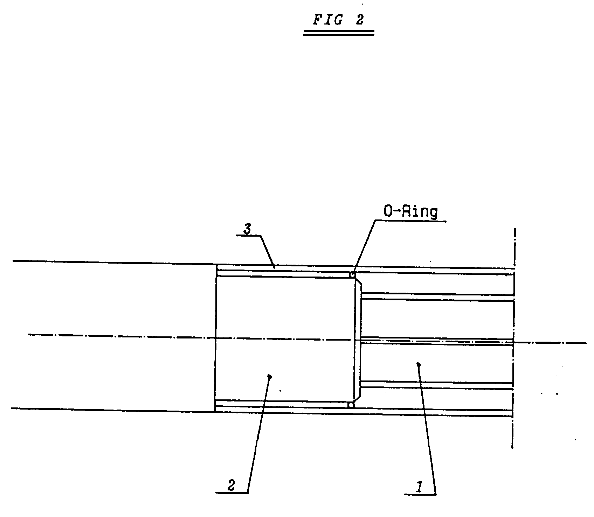

Bei Verwendung eines dünnflüssigen Klebers wird vorzugsweise eine Dichtung an der Stirnseite des inneren Profilteils 2 am Ende des Klebespaltes vorgesehen, die in Form eines O-Ringes oder eines pastösen Klebers ausgebildet sein kann, wie es in Fig. 2 dargestellt ist.

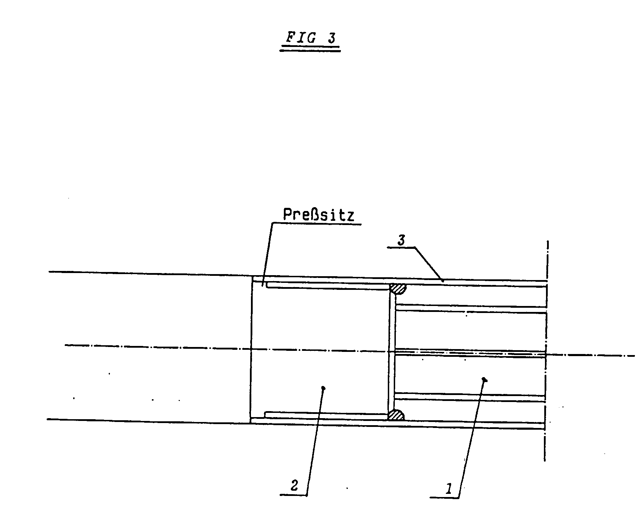

Wie es in Fig. 3 dargestellt ist, kann das innere Profilteil an einer Stelle an der Stirnseite des äußeren Profilteils mit einem radial vorstehenden Preßsitz versehen sein, über den der Endabschnitt des äußeren Profilteils 1 geschoben wird.

Die Ausbildung der Stege 3 erfordert bei der Herstellung des zugehörigen Profilteils nur einen geringen zusätzlichen Aufwand, da es durch Strangpressen ausgebildet wird und dabei die Stege 3 mitgepreßt werden, so daß nur eine etwas kompliziertere Preßmatrize benötigt wird. Wenn bei der Verbindung derjenige Teil, der mit den Stegen versehen ist, vor dem Zusammenschieben der Profilteile mit dem Kleber benetzt wird, dann kann verhindert werden, daß der flüssige Kleber vor dem Zusammenfügen in Umfangsrichtung an der Klebefläche entlangläuft und sich beim horizontalen Zusammenschieben beispielsweise am unteren Teil ansammelt.

Die Stege 3 führen die Bewegung beim Ineinanderschieben der Profilteile 1,2 derart, daß nahezu kein Kleber über den Klebespalt hinaus oder aus dem Klebespalt hinausgeschoben wird. Sie machen es möglich, beide Profilteile 1,2 in einfacher Weise zusammenzufügen, ohne daß dazu aufwendige Führungsvorrichtungen benötigt werden. Damit ist eine gleichmäßige Kleberverteilung und eine gute Prozeßsicherheit gewährleistet. Bei Biegebeanspruchungen übernehmen die Stege 3 der Verbindung die Krafteinleitung, so daß die verfestigte Klebermasse wenig beansprucht wird.

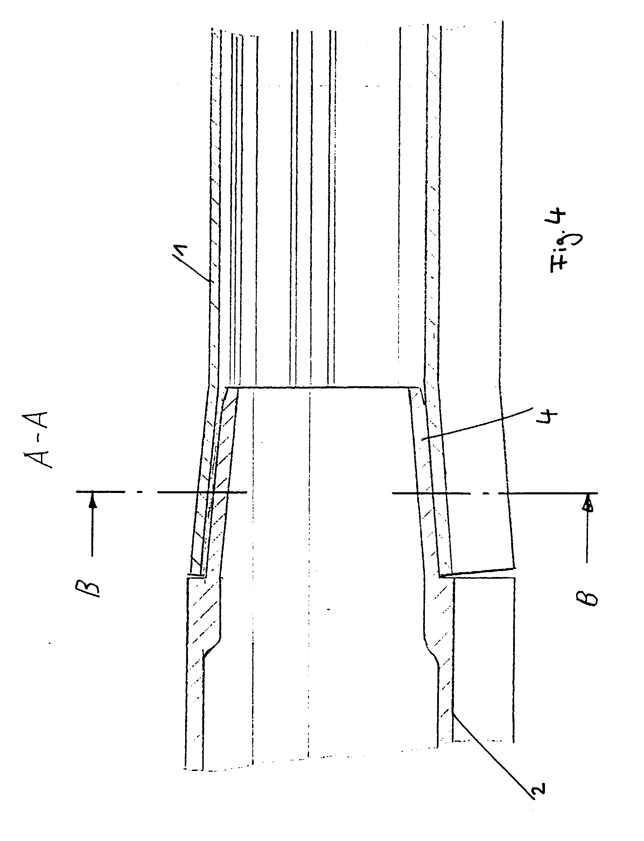

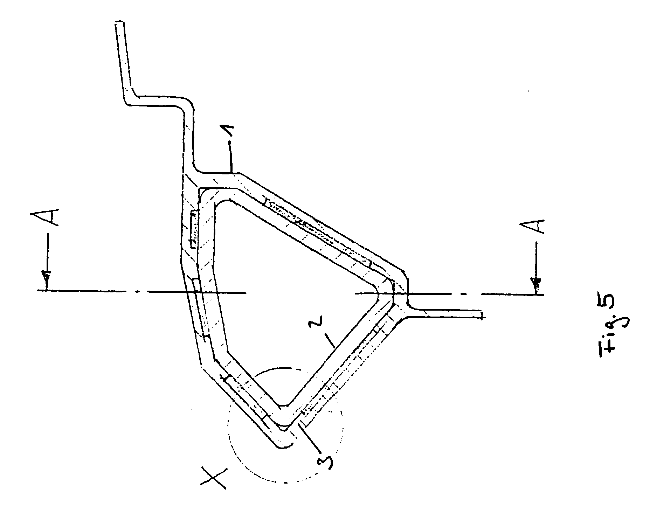

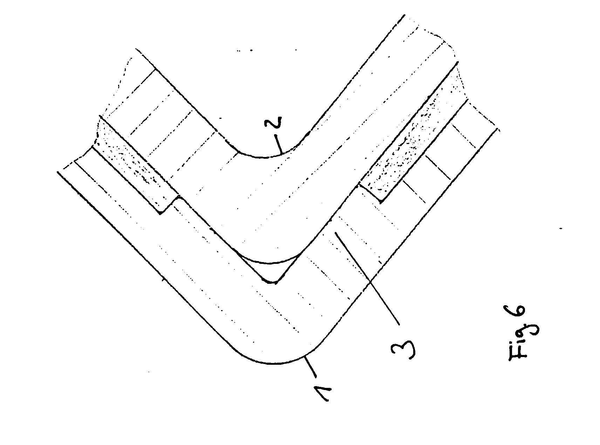

In den Figuren 4 bis 6 ist die Verbindung der Hohlprofile 1,2 mit polygonalem Querschnitt dargestellt. Wie es insbesondere in den Figuren 5 und 6 dargestellt ist, werden dabei die Stege 3 des Strangpreßprofilteils, das in diesem Fall das äußere Profilteil 1 ist, in das das innere Profilteil 2 eingeschoben wird, im Bereich der Ecken, d.h. in den Winkeln des Strangpreßprofilteils 1 ausgebildet, so daß dazwischen ebene Klebespalte gebildet sind, die von den ebenen Begrenzungsflächen der beiden Profilteile 1,2 begrenzt sind.

Die Dicke der Klebespalte ist im übrigen auf den Kleber abgestimmt und beträgt im typischen Fall etwa 0,8 mm.

Da bei der Verbindung die Stege 3 in den Winkeln angeordnet sind und die Klebebereiche sich an ebenen Begrenzungsflächen befinden, ergibt sich der Vorteil einer besseren Torosionsmomentübertragung beim Verkleben von Profilen mit polygonalem Querschnitt.

Wie es insbesondere in Figur 5 dargestellt ist, kann die Verbindung der beiden Profilteile 1 und 2 dadurch erfolgen, daß der in das äußere Profilteil 1 einzuschiebende Teil 4 des inneren Profilteils 2 etwa die Form eines Pyramidenstumpfes hat, auf den das äußere Profilteil aufgeschoben wird. Dabei wird das äußere Profilteil aufgeweitet. Durch die bereits beschriebene Ausbildung der Stege 3 in den Ecken oder Winkeln des äußeren Profilteils 1 ergibt sich dann der zusätzliche Vorteil, daß die Dicke der Klebespalte durch die Aufweitung des äußeren Profilteils 1 nicht verändert wird und sich die Profilquerschnittsfläche beim Aufweiten nur vergrößert, sich sonst aber, insbesondere in seiner Form nicht verändert, da das äußere Strangpreßprofil 1 mit den Stegen 3 auf dem inneren Profil 2 beim Aufschieben aufliegt.

Aufgrund dieser Ausbildung werden Torsionsmomente und Querkräfte hauptsächlich über die metallischen Stege 3 und nicht über die Klebeflächen übertragen.

Ein besonderes Anwendungsgebiet dieser Verbindung ist die Verbindung von Strangpreßprofilteilen, die nicht miteinander fluchten, beispielsweise zur Bildung eines Rahmens. Dazu werden die Profilteile an Gußprofilteilen befestigt, die die Verbindungsstücke zwischen den Strangpreßprofilteilen bilden. Ein derartiges Gußprofilteil oder ein Gußknoten wird bei der in Fig.5 dargestellten Verbindung mit einem Ansatz 4 ausgebildet, wobei die Schräge der Seitenflächen des Pyramidenstumpfes etwa 2% beträgt, was der normalen Gußschräge entspricht.

Die Verbindung ist vor allem bei der Serienfertigung von großen Stückzahlen vorteilhaft, da die Herstellung von Profilteilen mit Stegen bei steigender Stückzahl sehr kostengünstig ist.

## Patentansprüche

1. Verbindung von axial ineinander geschobenen Profilteilen mit polygonalem Querschnitt, bei der eines der Profilteile an seiner Verbindungsfläche zum anderen Profilteil mit axial verlaufenden Stegen versehen ist und die Profilteile am ineinander geschobenen Bereich miteinander verklebt sind, dadurch gekennzeichnet, daß das mit Stegen (3) versehene Profilteil (1) als Strangpreßprofilteil ausgebildet ist, wobei die Stege (3) axial durchgehend in den Ecken- oder Winkelbereichen des Profilteils mitgepreßt sind.

2. Verbindung nach Anspruch 1, dadurch gekennzeichnet, daß am Ende des Klebespaltes an der Stirnseite des inneren Profilteils (2) zwischen den ineinander geschobenen Profilteilen (1, 2) eine Dichtung angeordnet ist.

3. Verbindung nach Anspruch 1 oder 2, dadurch gekennzeichnet, daß das innere Profilteil (2) an der Stirnseite zum äußeren Profilteil (1) mit einem radial vorstehenden Preßsitz versehen ist, über den der Endabschnitt des äußeren Profilteils (1) geschoben ist.

## Claims

1. Connection of profiled parts of polygonal cross-section sliding axially into one another, in which one of the profiled parts is provided with axially extending webs on its connecting surface to the other profiled part and the profiled parts are glued to one another in the region where they slide into one another, characterised in that the profiled part (1) provided with webs (3) is constructed as an extruded profiled part, said webs (3) being pressed with it to pass axially through into the corner or angle regions of the profiled part.

2. Connection according to Claim 1, characterised in that a seal is arranged at the end of the gluing gap on the face side of the inner profiled part (2) between the profiled parts (1, 2) sliding into one another.

3. Connection according to Claim 1 or 2, characterised in that on its front side facing the outer profiled part (1), the inner profiled part (2) is provided with a radially protruding press fit, over which the end section of the outer profiled part (1) slides.

## Revendications

1. Liaison de pièces profilées repoussées axialement l'une dans l'autre et possédant une section transversale polygonale, dans laquelle l'une des pièces profilées comporte, au niveau de sa surface de liaison avec l'autre pièce profilée, des barrettes axiales, et les pièces profilées sont collées entre elles dans la zone dans laquelle elles sont repoussées l'une dans l'autre, caractérisée en ce que la pièce profilée (1) pourvue de barrettes (3) est agencée sous la forme d'une pièce profilée extrudée, les barrettes (3) étant formées conjointement par extrusion, axialement et d'une manière continue, dans les zones de coin ou d'angle de la pièce profilée.

2. Liaison selon la revendication 1, caractérisée en ce qu'une garniture d'étanchéité est disposée à l'extrémité de la fente de collage sur la face frontale de la pièce profilée intérieure (2) entre les pièces profilées (1,2) repoussées l'une dans l'autre.

3. Liaison selon la revendication 1 ou 2, caractériée en ce que la pièce profilée intérieure (2) comporte, sur la face frontale tournée vers la pièce profilée extérieure (1), un siège de serrage qui fait saillie radialement et sur lequel est repoussée la section d'extrémité de la pièce profilée extérieure (1).
